(19) Europäisches Patentamt
European Patent Office
Office européen des brevets

(11) **EP 2 682 368 A1**

(12) **EUROPÄISCHE PATENTANMELDUNG**

(43) Veröffentlichungstag:
**08.01.2014 Patentblatt 2014/02**

(51) Int Cl.:
*C01D 15/00* (2006.01)  *H01M 4/136* (2010.01)

(21) Anmeldenummer: **13174986.3**

(22) Anmeldetag: **03.07.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.07.2012   DE 102012106100**

(71) Anmelder: **Fraunhofer-Gesellschaft zur Förderung der angewandten Forschung e.V.
80686 München (DE)**

(72) Erfinder:
• **Andersen, Hanne
97082 Würzburg (DE)**
• **Möller, Kai-Christian
80639 München (DE)**
• **Dehnen, Stefanie
76135 Karlsruhe (DE)**
• **Kaib, Thomas
35043 Marburg (DE)**
• **Kaib-Haddadpour, Sima
35043 Marburg (DE)**

(74) Vertreter: **Olgemöller, Luitgard Maria
Lindenstraße 12a
81545 München (DE)**

(54) **Binäre und ternäre Alkalimetallchalkogenidometallate mit Diamant-Topologie und ihre Verwendung als Interkalationsmaterialien, insbesondere in Sekundärbatterien**

(57) Die vorliegende Erfindung betrifft eine Verbindung der Zusammensetzung

$$A_n M^q_z T_x Q_y \cdot mROH \qquad (I)$$

worin
A = Alkalimetall
M = Ion eines Übergangsmetallelements und der Wertigkeit q
T = Tetrel, mit Ausnahme von Pb,
Q = Chalkogen
ROH = kristallisiertes Lösungsmittel, mit R = H, $CH_3$ und/oder $C_2H_5$
n=2y-4x-zq
z = 0 oder 1 oder >1
x = 2y - 2zq - n
y = n + zq + 4x,
m = 0, 1 oder größer 1, q= 1, 2, 3, 4, 5 oder 6

wobei die Verbindung in einer Kristallstruktur mit Diamanttopologie vorliegt, in welcher
- entweder A, T und Q sowie ggf. M Gitterplätze der kubischen oder hexagonalen Diamantstruktur einnehmen oder
- die Schwerpunkte komplexer Anionen $[T_x Q_y]^{nz-}$ und/oder $[M_z T_x Q_z]^{n-}$ die Gitterplätze (Atompositionen) der kubischen oder hexagonalen Diamantstruktur einnehmen, während die Ionen des Alkalimetalls A sowie ROH, sofern m ≠ 0, Zwischengitterplätze einnehmen,

die sich zur Leitung und/oder Speicherung von Alkalimetallkationen eignet und daher z.B. in Kombination mit einem elektronenleitenden Material ein Elektrodenmaterial darstellen kann.

EP 2 682 368 A1

**(Forts. nächste Seite)**

Figur 2b

**Beschreibung**

Die vorliegende Erfindung betrifft binäre und ternäre Alkalimetallchalkogenidometallate mit Diamant-Topologie mit hoher Ladekapazität, schneller Lade- und Entladegeschwindigkeit und hoher elektrochemischer Stabilität, die sich als Alkalimetallionenleiter und -speicher in Sekundärbatterien eignen.

Beim Transport von Alkalimetallionen, insbesondere Lithiumionen, mit deren Hilfe die elektrische Ladung in Sekundärbatterien (Akkumulatoren) von einer der beiden Elektroden zur anderen transportiert wird, besteht die Notwendigkeit, an der jeweiligen Elektrode ankommende Lithiumionen in Form der elementaren Lithiumatome zu speichern, da sie dort durch die Aufnahme von Elektronen zum neutralen Element reduziert werden. Ursprünglich hat man hierbei das "nackte" Metall auf dem Stromsammler der negativen Elektrode abgeschieden; später ging man dazu über, Graphit als Elektrode einzusetzen, um die Sicherheit zu erhöhen und die Bildung von Dendriten zu vermeiden. Dieses Material interkaliert Lithium nach der nachstehenden Gleichung:

$$xLi^+ + xe^- + C_6 \rightarrow Li_xC_6$$

Damit lassen sich allerdings nur Kapazitäten von bis zu 372 mA h g$^{-1}$ erreichen, siehe J.M.Tarascon, M. Armand, Nature, 2001, 414, 359, während die Stabilität hoch ist. Inzwischen wurde eine Vielzahl von alternativen Materialien vorgeschlagen, darunter $SnO_2$, $GeO_2$ und $SiO_2$, siehe L. Ji et al., Energy and Environmental Science, 2011, 196, 2682. Diese haben zwar den Vorteil einer hohen Kapazität, sind jedoch sehr instabil; durch die Interkalation erreichen sie eine Ausdehnung von über 400%. Auch Kombinationen mit Graphit und Legierungsmaterialien wurden vorgeschlagen, hauptsächlich mit Zinn (siehe US 6,908,709 B2), aber auch mit Titan, Antimon oder Cobalt. Dabei dient der Graphit der Verringerung der Ausdehnung durch die Interkalation. Jedoch besitzen auch derartige negative Elektroden Nachteile und sind verbesserungsbedürftig. Denn ihre Ladungshaltung ist nicht ausreichend, nach 100 Zyklen ist die coulomb'sche Effizienz höchstens 93%. Außerdem wird durch die Legierung mit den Übergangsmetallen die Ausdehnung des Sn-Materials nicht beseitigt.

In DE 69827700 T2 werden Materialien untersucht, die sich möglicherweise als negative Elektrodenmaterialien in Sekundärbatterien mit nichtwässrigen Elektrolyten eignen, wobei die Vermeidung von Dendritenwachstum im Vordergrund steht. Eine Vielzahl von Oxiden und Sulfiden wurde untersucht; nur Bariumverbindungen wurden für brauchbar befunden. Mit Hilfe von Röntgenstrahlbeugung wurde ermittelt, dass ein - nicht näher spezifiziertes, Zinn und Sauerstoff enthaltendes - Material gemäß der Erfindung bei der Einlagerung von Lithium eine Sn-Li-Legierung bildete. Die Tabelle der untersuchten Verbindungen umfasst das Selenostannat $Na_2SnSe_3$, eine Verbindung, in der die Na+-Ionen fünffach koordiniert sind. Die Kristallstruktur dieses Materials wurde von K. O. Klepp in Journal of Solid State Chemistry 117, 356-362 (1995) veröffentlicht; sie ist als orthorhombisch angegeben und besitzt keine Verwandtschaft mit der Topologie von Diamant.

Eine Vielzahl von Verbindungen, die Lithium interkalieren und deinterkalieren können, offenbart auch DE 594 34 683 T2. Diese umfassen Oxide und Chalkogenide 3-5-wertiger Metalle mit mindestens zwei verschiedenen Metallkationen. Bei der Interkalation entstehen hier keine Lithium-Legierungen. Das für die Batterie eingesetzte Material ist vorzugsweise amorph; sollte es jedoch kristallin ist, verändert es durch die Li-Einlagerung seine Struktur und kann dabei amorph werden.

Chalkogenidverbindungen als Material für eine negative Elektrode sind auch EP 671774 B1 entnehmbar. Auch gemäß dieser Druckschrift ist das Material vor Beginn der Interkalation vorzugsweise amorph. EP 1 039 568 B1 schlägt ein partikelförmiges Material als Material für eine negative Elektrode vor, welches eine amorphe Legierung von Zinn mit zwei weiteren Elementen umfasst, die aus einer großen Anzahl von Möglichkeiten ausgewählt sein können. Die Mikroräume zwischen den Partikeln erlauben es dem Material, sich während der Interkalation auszudehnen.

US 6,528,208 B1 beschreibt eine negative Elektrode mit einer intermetallischen Wirtsstruktur aus zwei oder mehr Elementen, ausgewählt unter Metallen und Silicium, die Lithium in das Wirtssystem integrieren kann. Unter Zulegierung von Lithium wird dabei das ursprünglich im NiAs- oder $Ni_2In$-Typ gepackte Wirtsgitter in ein Gitter vom Zinkblende-Typ umgewandelt; betrachtet man das Gitter, das sich unter Einbeziehung der Lithium-Atome ergibt, so zeigt sich, dass es sich dabei um ein Gitter vom Fluorid- bzw. Antifluorid-Typ handelt.

Aufgabe der Erfindung ist es, ein Material zum effizienten Speichern und/oder Leiten von Alkalimetallkationen bereitzustellen, wobei es entweder Alkalimetallionen, insbesondere Lithiumatome derart einlagern kann, dass es sich als Bestandteil einer negativen Elektrode eignet, dabei aber die Nachteile des Standes der Technik nicht aufweist, und/oder eine hohe Leitfähigkeit für Alkalimetallionen zeigt, derart, dass man es als Festkörperleiter für diese Ionen ansehen kann. Insbesondere soll es die Herstellung einer Elektrode mit einer sehr hohen Kapazität bei hoher Zyklenstabilität ermöglichen. Dies bedeutet, dass die Ausdehnung des Materials bei der Speicherung von insbesondere Lithiumionen nicht zu hoch sein sollte, dass sich die SEI-Schicht ("Solid Electrolyte Interface", die Passivierungs- und Schutzschicht, die sich beim Zyklen durch Reaktion der Elektrodenoberfläche mit dem Flüssigelektrolyten bildet) möglichst nach wenigen Zyklen stabilisiert hat derart, dass sie nicht oder kaum mehr weiter wächst und insbesondere dabei nicht dicker wird (was das Eindringen der Li$^+$-Ionen in die Elektrode zunehmend erschweren würde), dass das Degradationsverhalten beim Zykeln, das durch das wiederholte Sich-Ausdehnen und Schrumpfen bei bzw. infolge einer nicht ganz vollständigen Deinterkalation zu beobachten sein kann, günstig beeinflusst wird und das die C-Rate, also die Geschwindigkeit der Entladung, günstige Werte annehmen kann. Darüber hinaus soll das Material frei von toxischen Stoffen wie Barium oder Blei sein.

Die Erfinder haben überraschend feststellen können, dass binäre oder ternäre Alkalimetallchalkogenidometallate der Zusammensetzung $A_nT_xQ_y$ oder $A_nM_xT_yQ_z$ (A = Alkalimetall, M = Übergangsmetall, T = Tetrel, Q = Chalkogen; n, x, y, z: stöchiometrische Parameter entsprechend der Zusammensetzung), die Diamant-Topologie besitzen, die gestellte Aufgabe lösen. Sie vermuten, ohne hieran gebunden sein zu wollen, dass dies an der systematisch großen Zahl an unbesetzten Gitterplätzen in diesen Substanzen liegt, die sich daher sehr gut zum Eintrag, zur Einlagerung, zum Austrag und zur Leitung von Alkalimetallkationen eignen. Die einkristallinen Strukturen haben aufgrund der Eigenschaften der Diamanttopologie ebenso viele Lücken wie besetzte Gitterpositionen. Außerdem ermöglichen die vorhandenen Lücken in der Struktur eine gute Durchlässigkeit zur Kationenleitung. Dadurch lässt sich bei großer Stabilität der Strukturen eine hohe Li$^+$-Beweglichkeit und eine große Einlagerungskapazität erreichen.

Die erfindungsgemäß verwendbaren Verbindungen besitzen die Zusammensetzung der allgemeinen Formel (I)

$$A_nM^q{}_zT_xQ_Y \cdot mROH \qquad (I)$$

worin

A = Alkalimetall

M = Ion eines Übergangsmetallelements und der Wertigkeit (formalen Oxidationsstufe) q

T = Tetrel, mit Ausnahme von Pb,

Q = Chalkogen

ROH = kristallisiertes Lösungsmittel, mit R = H, $CH_3$ und/oder $C_2H_5$

n = 2y - 4x - zq

z = 0 oder 1 oder >1

x = 2y - 2zq - n

y = n + zq + 4x,

m = 0, 1 oder größer 1,

q = 1, 2, 3, 4, 5 oder 6, vorzugsweise 1, 2, oder 3, (d.h. die Formel umfasst Übergangsmetallelemente der formalen Oxidationsstufe I, II. III. IV, V und VI, vorzugsweise der formalen Oxidationsstufe I, II und III),

wobei die Verbindung in einer Kristallstruktur mit Diamanttopologie vorliegt, in welcher

- entweder A, T und Q sowie ggf. M Gitterplätze der kubischen oder hexagonalen Diamantstruktur einnehmen oder
- die Schwerpunkte komplexer Anionen $[T_xQ_y]^{nz-}$ und/oder $[M_zT_xQ_z]^{n-}$ die Gitterplätze (Atompositionen) der kubischen oder hexagonalen Diamantstruktur einnehmen, während die Ionen des Alkalimetalls A sowie ROH, sofern m ≠ 0, Zwischengitterplätze einnehmen.

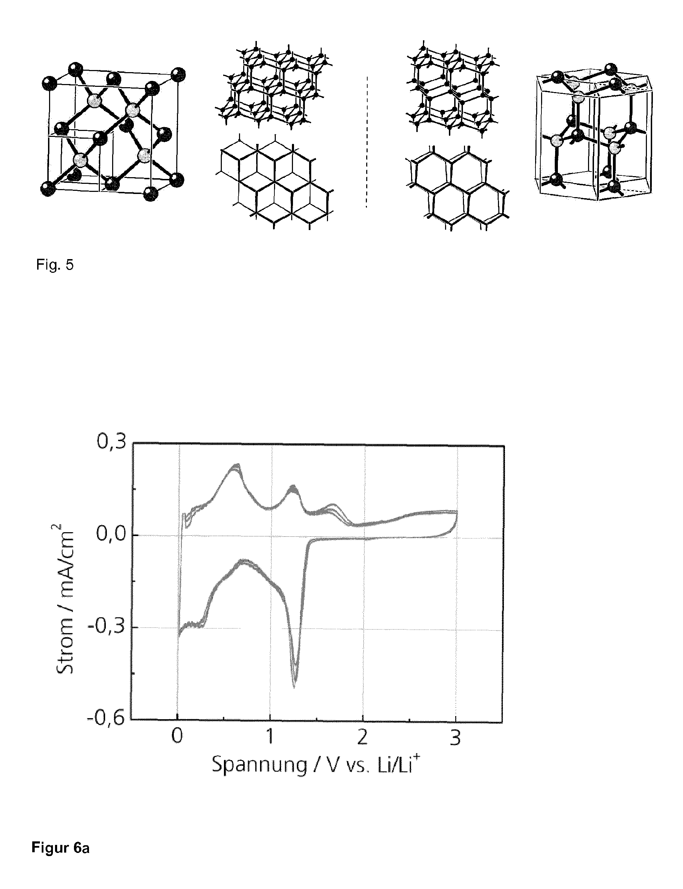

Dabei umfasst der Ausdruck "Diamanttopologie", wie er vorliegend verwendet wird, nicht nur die die (kubischen bzw. hexagonalen) Diamantstrukturen selbst (also mit den exakten Abmessungen der Kohlenstoffmodifikationen), sondern auch solche diamantartigen Strukturen, in denen entweder (a) aufgrund anderer Ionendurchmesser als dem Durchmesser von Kohlenstoff andere Abstände und/oder Bindungseigenschaften als im Diamant vorliegen und/oder (b) eine oder mehrere Streckung(en) und/oder Stauchung(en) in einer Richtung oder in unterschiedlichen Richtungen der Elementarzellen verwirklicht sind, wodurch eine Symmetriereduktion zu beobachten ist (Typ A, siehe weiter unten). Sofern die Schwerpunkte komplexer Anionen wie oben definiert die Gitterplätze einnehmen, spricht man von "secondary building units" (SBUs), die innerhalb einer Überstruktur der komplexen Anionenteilstruktur die relativen Atomlagen der Diamantstruktur einnehmen (Typ B, siehe weiter unten). Während in den Fällen (a) und (b) die (Alkali-)Metallkationen Bestandteil der Diamanttopologie sind, befinden sich diese dann, wenn die Schwerpunkte der SBUs die Gitterplätze einnehmen, in den (großen) Hohlräumen der Anionenteilstruktur. In **Figur 5** sind verschiedene Ansichten der kubischen **(Fig. 5a)** und der hexagonalen **(Fig. 5b)** Diamantstruktur gezeigt.

Unter den erfindungsgemäß verwendbaren Substanzen der Formel (I) sind solche noch nicht aus dem Stand der Technik bekannt, in denen A = Li, M = Mn$^{2+}$, T = Sn, Q = Se, n = 2 oder 4, z = 0 oder 1, x = 1 oder 2 und y = 3 oder 7 ist. Besonders bevorzugt unter diesen sind die Substanzen der Zusammensetzung $Li_2SnSe_3$ oder $Li_4MnSn_2Se_7$.

Die Synthese der genannten Verbindungen kann auf unterschiedlichen Wegen erfolgen, die dem Grunde nach aus dem Stand der Technik bekannt sind. Beispiele sind die im Folgenden skizzierten Routen a) - c):

a)

$$A_2Q_m\text{-Flux}$$

$$n/2A_2Q + zM^q + xT + yQ \xrightarrow{\hspace{3cm}} A_nM^q_zT_xQ_y$$

Hierbei handelt es sich um eine milde Festkörperreaktion bei bis zu 650°C. Das gebildete Alkalimetallpolychalkogenid $A_2Q_m$ enthält in der Regel eine nicht definierte Mischung verschiedener Polychalkogenidanionen, die in der Summe maximal $n/2+y$ Chalkogenatome enthalten können; y bezeichnet in der Regel einen größeren Überschuss.

b)

$$n/2A_2Q + xT + (y-n/2)Q \xrightarrow{650\text{-}1200°C} A_nT_xQ_y \xrightarrow[-(a\text{-}m)\,ROH]{+\,a\,ROH} [A_n(ROH)_m][T_xQ_y]$$

a bezeichnet einen größeren Überschuss. Co-kristallisierendes Lösungsmittel ROH kann anschließend durch Trocknen unter vermindertem Druck entfernt werden.

$$c)\ [A_n(ROH)_m][T_xQ_y] + x'\,M^2X_2 \xrightarrow{\hspace{3cm}} [A_{n'}(ROH)_{m'}][M_{x'}T_{y'}Q_{z'}]$$
$$-\text{ Nebenprodukte}$$
$$(AX_2, TQ_2, T, \ldots)$$

mit X = Halogenid, z.B. Cl⁻. Diese Reaktion findet vorzugsweise in einer Lösung von ROH statt. Die Kristallisation kann durch Überschichten mit unpolarerem Lösungsmittel (THF oder Toluol) bewirkt werden. Dieses findet sich nicht in der Festkörperstruktur wieder. Überschüssiges Lösungsmittel ROH kann anschließend durch Trocknen unter reduziertem Druck entfernt werden.

Auf diesen Wegen lassen sich zahlreiche Phasen mit oder ohne Kristallsolvens ROH erzeugen, deren Strukturen sich von der kubischen oder der hexagonalen Diamant-Topologie ableiten lassen. Diese kann auf zwei prinzipiell unterschiedlichen Wegen erreicht werden (A oder B):

Typ A:

Die Atome der Elemente A, M, T und Q besetzen in der Summe alle Atompositionen, die der kubischen oder des hexagonalen Diamantstruktur entsprechen. Die Lücken der Diamant-Topologie bleiben hierbei komplett frei. Dabei können die Anionen ein ausgedehntes Anionen-Netzwerk ausbilden. Dieses kann eindimensionale Strukturen wie Ketten oder Leitern (TypA1), zweidimensionale (flächenartige) Strukturen (TypA2) oder aber Strukturen aufweisen, die sich in alle drei Raumrichtungen erstrecken (TypA3), oder aber die Anionen können diskret und voneinander separiert vorliegen (Typ A4).

Typ B:

Die Verbindung bildet eine Überstruktur aus, in der die Schwerpunkte der komplexen Anionen $[T_xQ_y]^{n-}$ oder $[M_xT_yQ_z]^{n-}$ entsprechend der Atompositionen im kubischen oder hexagonalen Diamant angeordnet sind. Dabei können die Anionen ein ausgedehntes Anionen-Netzwerk ausbilden, das wie für den Typ A geschildert eindimensionale (TypB1), zweidimensionale (TypB2), oder dreidimensionale (TypB3) Strukturen besitzt, oder aber die komplexen Anionen können diskret und voneinander separiert vorliegen (Typ B4). Die n A⁺-Kationen pro Formeleinheit sind in einem Teil der Lücken der Diamant-Topologie positioniert.

Exemplarisch werden im Folgenden einige Materialbeispiele für die genannten Typen beschrieben, anhand entsprechender Abbildung ihr Bezug zur Diamant-Topologie skizziert und ihre elektrochemischen Eigenschaften vorgestellt.

Materialbeispiel 1: $Li_2SnSe_3$ (Typ A1)

Die Synthese läuft ab nach dem Schema:

$$Li_2Se + Sn + 2\ Se \xrightarrow{\quad 700°C \quad} A_nT_xQ_y$$

Ein stöchiometrisches Gemisch von 0.503 g (5.4 mmol) Li2Se, 0.643 g (5.4 mmol) Sn und 0.855 g (10.8 mmol) Se wird in einer Silikatglasampulle vermischt, mit Hilfe eines Bunsenbrenners aufgeschmolzen, und die Schmelze wird für weitere 30 Minuten erhitzt, wobei das Produkt als amorphes oder mikrokristallines Pulver anfällt. Zur Synthese einkristalliner Phasen wird die Reaktion in einem Hochtemperaturofen mit folgendem Temperaturprogramm durchgeführt: Aufheizen auf 650°C mit 70°C/h, 12 h bei 650°C belassen, auf Raumtemperatur abkühlen (4°C/h). Die Ausbeute beträgt 1.437 g (72%). Als Nebenprodukte fallen Polyselenide an, die sich durch Extraktion abtrennen lassen.

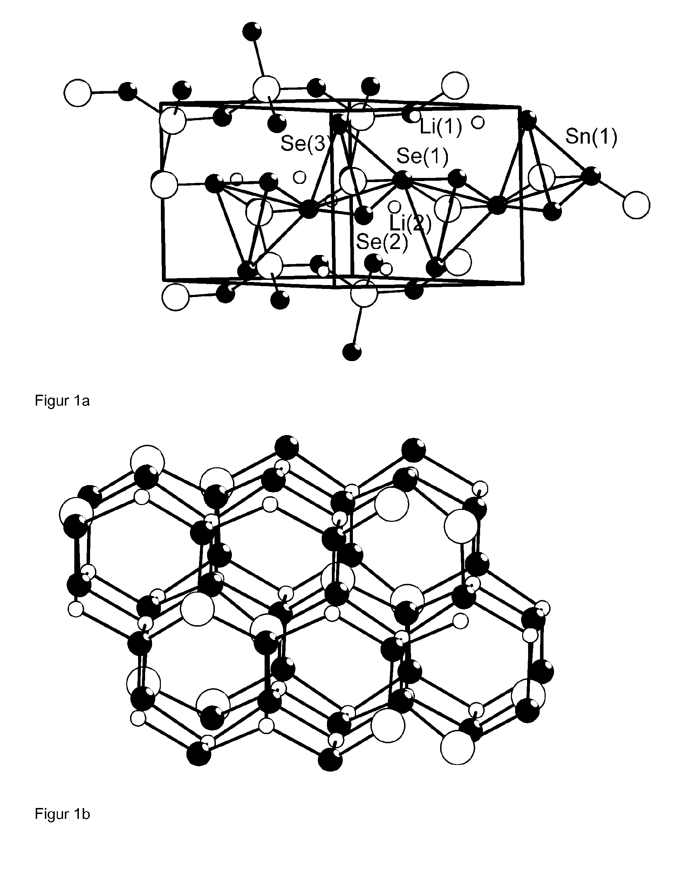

Die ternäre Phase $Li_2SnSe_3$ (Typ B1) enthält binäre Anionen mit eindimensional ausgedehnten Anionen-Strängen $\{[SnSe_3]^{2-}\}$ aus eckenverknüpften $[SnSe_4]$-Tetraedern. Die Li-, Sn- und Se-Atome besetzen zusammen alle Positionen einer verzerrten und entsprechend der Elementsorten aufgeweiteten, hexagonalen Diamantstruktur. Den 14 Atomen pro Formeleinheit stehen entsprechend der Gesetzmäßigkeiten der Diamant-Topologie 14 unbesetzte Gitterplätze gegenüber. Da es sich um den hexagonalen Typ der Diamanttopologie handelt, sind die freien Gitterplätze zudem besonders leicht zugänglich, da in der Struktur Kanäle vorliegen [vgl. **Figur 5(b)]**. Die **Figuren 1a und 1b** zeigen Ausschnitte (Ansichten der Elementarzelle) der Festkörperstruktur von $Li_2[SnSe_3]$. Es handelt sich um eine Struktur des Typs A1, bei der die Li-, Mn-, Sn- und Se-Atome alle Positionen einer verzerrten und entsprechend der Elementsorten aufgeweiteten, hexagonalen Diamantstruktur besetzen.

Materialbeispiel 2: $Li_4MnSn_2Se_7$ (Typ A3)

Die Synthese läuft ab nach dem Schema:

$$4\ Li_2Se + Mn + 4\ Sn + 16\ Se \xrightarrow{\quad Li_2Se_m\text{-Flux, }650°C \quad} Li_4MnSn_2Se_7$$

- 2 $Li_2SnSe_3$ (Abtrennung durch Auswaschen mit $H_2O$)
- 7 Se (Abtrennung durch Sublimation)

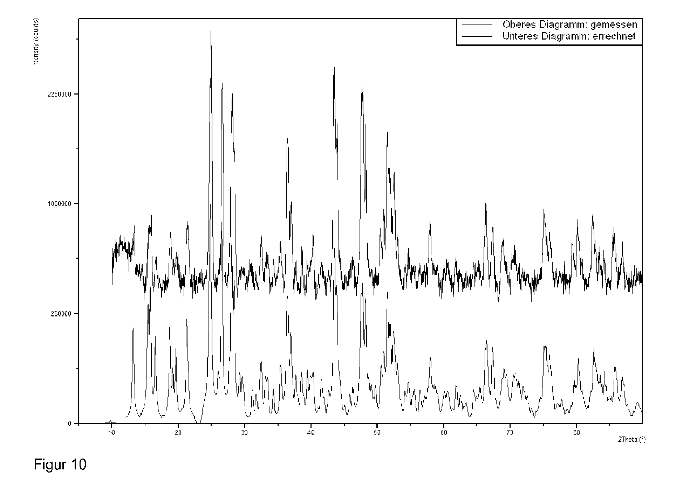

Ein stöchiometrisches Gemisch von 0.686 g (15.36 mmol) Li2S, 0.877 g (7.39 mmol) Sn, 2.335 g (29.57 mmol) S und 0.102 g (1.85 mmol) Mn werden in einer Quarzglasampulle vermischt und zum Flux erhitzt, wofür ein Hochtemperaturofen mit folgendem Temperaturprogramm verwendet wird: Aufheizen auf 650°C (18 °C/h), 24 h bei 650°C belassen, Abkühlen auf Raumtemperatur (6 °C/h). Das Produkt entsteht in einkristalliner Form neben ternären Li/Sn/Se-Phasen und überschüssigem Se. Zur Aufreinigung wird das Produktgemisch mit Wasser gewaschen (Herauslösen der wasserlöslichen Li/Sn/Se-Phasen) und anschließend wird Se bei 500°C unter reduziertem Druck (10-6 Pa) absublimiert. Die Phasenreinheit ist mittels Pulverröntgendiffraktometrie nachweisbar: **Figur 10** zeigt einmal das gemessene Pulverdiagramm und zum anderen ein Diagramm, das sich durch mathematische Simulation der Röntgenstruktur erhalten lässt. In den Diagrammen ist jeweils die Intensität (gemessen in "Counts", d.h. der Anzahl der im betreffenden 2Θ-Bereich detektierten Röntgenquanten) gegen den Beugungswinkel 2Θ aufgetragen.

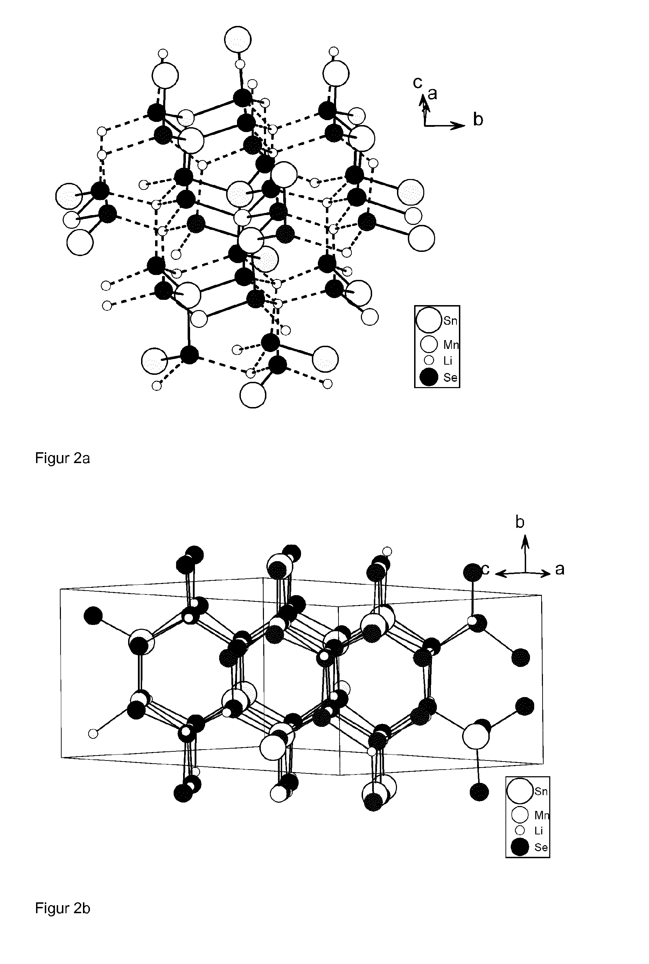

Auch in der quaternären Phase $Li_4MnSn_2Se_7$ (Typ 3), besetzen die Li-, Mn-, Sn- und Se-Atome demnach alle Positionen einer verzerrten und entsprechend den Elementsorten aufgeweiteten, hexagonalen Diamantstruktur. Die **Figuren 2a und 2b** zeigen zwei Ansichten der Elementarzelle der Festkörperstruktur von $Li_4MnSn_2Se_7$ (Typ A3), bei der die Li-, Mn-, Sn- und Se-Atome alle Positionen einer verzerrten und entsprechend den Elementsorten aufgeweiteten, hexagonalen Diamantstruktur besetzen.

Materialbeispiel 3: $[K_2(H_2O)_3][MnGe_4Se_{10}]$ (Typ B3)

Dieses Material wurde hergestellt wie in S. Haddadpour, M. Melullis, H. Staesche, C.R. Mariappan, B. Roling, R Clérac, S. Dehnen, Inorg. Chem. 48, 1689-1698 (2009) angegeben. Die quaternäre Verbindung $[K_4(H_2O)_3]$

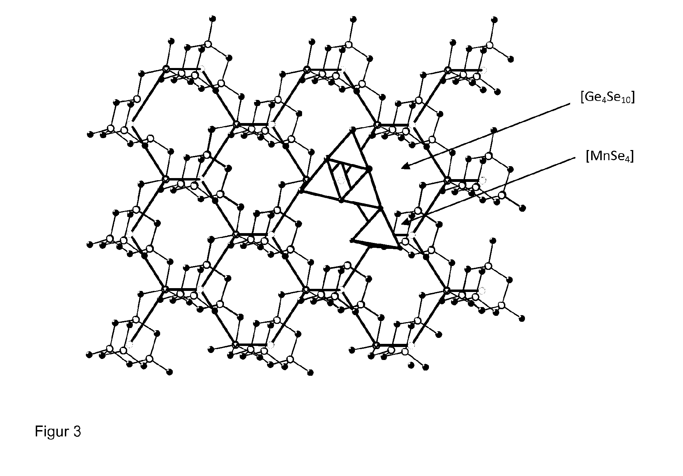

[MnGe$_4$Se$_{10}$] (Typ B3) enthält ein dreidimensional ausgedehntes Anionen-Netzwerk, bei dem [Ge$_4$Se$_{10}$]-Einheiten und [MnSe$_4$]-Einheiten derart über je vier Ecken verknüpft sind, dass die Schwerpunkte der Einheiten einer hexagonalen Diamant-Topologie entsprechen. Die K$^+$-Kationen sind in den geräumigen Kanälen dieser Überstruktur angesiedelt und darin fehlgeordnet. Wenngleich gleichviele Kationen wie Packungseinheiten vorliegen, so dass die Lücken der Diamant-Topologie formal komplett besetzt wären, so besteht doch eine erhebliche Mobilität der Alkalimetallkationen, da die Hohlräume der Überstruktur mehrere Kationen zugleich beherbergen können. Dies erklärt auch das Auftreten von Fehlordnung. Die **Figur 3** zeigt einen Ausschnitt aus der Festkörperstruktur von [K$_2$(H$_2$O)$_3$][MnGe$_4$Se$_{10}$] ] (Typ B3), bei der die Schwerpunkte der [Ge$_4$Se$_{10}$]- und [MnSe$_4$]-Einheiten eine Überstruktur bilden, die einer verzerrten und stark aufgeweiteten, hexagonalen Diamantstruktur entspricht (angedeutet durch graue Linien in der Figur) und illustriert dabei die K$^+$-Ionenleitfähigkeit der Verbindung [K$_2$(H$_2$O)$_3$][MnGe$_4$Se$_{10}$].

Materialbeispiel 4: [K$_4$(H$_2$O)$_4$][GeSe$_4$] (Typ B4)

Dieses Material wurde hergestellt wie in M. Melullis, S. Dehnen, Z. anorg. Allg. Chem. 633, 2159-2167 (2007) angegeben.

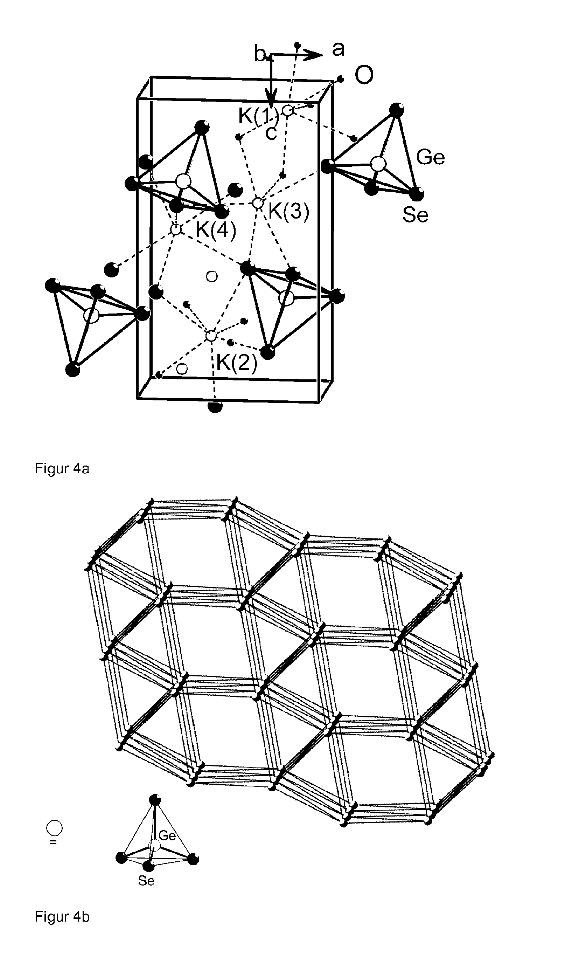

In K$_4$(H$_2$O)$_4$][GeSe$_4$] (Typ B4) sind die Schwerpunkte von diskreten, monomeren Anionen in einer diamant-ähnlichen Art angeordnet. Man kann dies anhand der **Figuren 4a und 4b** erkennen: **Fig. 4a** zeigt einen Ausschnitt aus der Kristallstruktur von K$_4$(H$_2$O)$_4$][GeSe$_4$] (Typ B4). **Fig. 4b** zeigt eine vereinfachte Darstellung der Diamanttopologie der Verbindung; jede gezeichnete Kugel entspricht dem Schwerpunkt eines Anionen [GeSe$_4$]$^{4-}$.

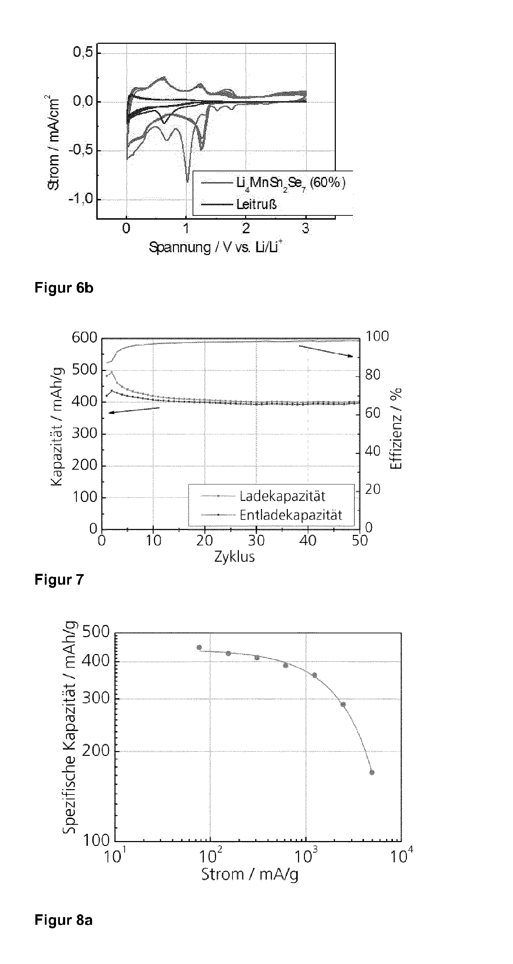

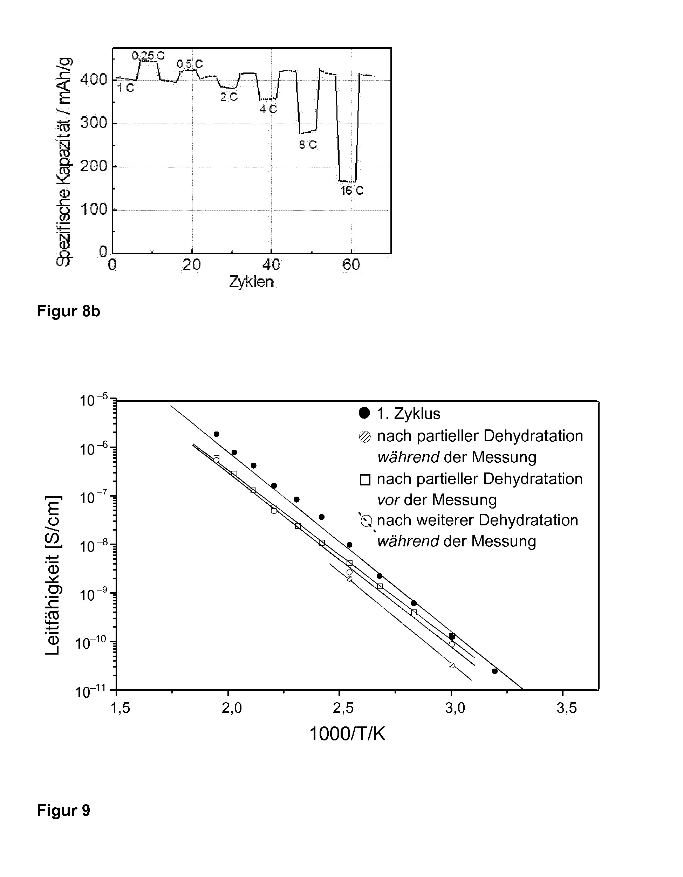

Die Erfinder haben festgestellt, dass die erfindungsgemäßen Materialien aufgrund ihrer ionischen und elektronischen Eigenschaften zum Einsatz als negatives Elektrodenmaterial in Sekundärbatterien mit Alkaliionentransport, insbesondere in Lithiumionenbatterien, gut geeignet sind. Gemäß impedanzspektroskopischer Messungen besitzt beispielsweise Li$_2$SnSe$_3$ eine Aktivierungsenergie für die Ionenleitung von 0,63 eV und eine Leitfähigkeit bei Raumtemperatur von 10$^{-10}$ Scm$^{-1}$K, bei 200°C von 10$^{-2}$ Scm$^{-1}$K. [K$_2$(H$_2$O)$_3$][MnGe$_4$Se$_{10}$] besitzt eine Aktivierungsenergie für die Ionenleitung von ca. 0.75 eV und eine Leitfähigkeit bei Raumtemperatur von 10$^{-11}$ Scm$^{-1}$K, bei 200°C von 10$^{-7}$ Scm$^{-1}$K. In **Figur 6a** sind die Ergebnisse cyclovoltammographischer Untersuchungen einer negativen Elektrode, die Li$_4$MnSn$_2$Se$_7$ als Interkalationsmaterial enthält, dargestellt. Die hierfür verwendete Halbzelle ist weiter unten näher erläutert. Dem Voltammogramm lässt sich entnehmen, dass die elektrochemischen Reaktionen der Halbzelle reversibel sind, und deutet auf eine hohe Stabilität hin. Insgesamt wurde das Material über 300 Zyklen hinweg aufgezeichnet. Aus **Figur 7,** in der eine Langzeitmessung über 50 Zyklen dargestellt ist, geht die große elektrochemische Stabilität und Kapazität dieses Materials hervor. **Figur 8a** zeigt ein Ragone-Diagramm dieses Materials, gemessen mit variierenden Stromraten. Hier werden die hervorragenden Eigenschaften des Materials deutlich: Auch bei einer Laderate über 10C (4900 mA/g) beträgt die Kapazität noch über 170 mAh/g. In **Figur 9** ist ein Arrhenius-Plot zur Dokumentation der Li$^+$-Leitfähigkeit von [K$_4$(H$_2$O)$_3$][MnGe$_4$Se$_{10}$] aufgezeichnet, dem sich auch die obigen Werte entnehmen lassen. Hier ist die Leitfähigkeit in S/cm gegen 1000/T/K aufgetragen.

Die erfindungsgemäß einsetzbaren Materialien können entweder kristallförmig oder als vermahlenes Pulver verwendet werden. Zur Herstellung einer Elektrodenpaste

(Beschichtungspaste) für eine negative Elektrode werden sie vorzugsweise mit Kohlenstoff (z.B. Leitruß) und einem Bindemittel z.B. einem fluorierten Polymer, ggf. in Kombination mit einem Lösemittel, gemischt. Es können variable Mengenverhältnisse eingesetzt werden. Günstig sind natürlich hohe Anteile an der jeweiligen aktiven Verbindung.

Die erfindungsgemäß einsetzbaren Materialien wurden anhand von Untersuchungen getestet, die nachstehend näher beschrieben werden.

Eine Standardmessung wurde mit der folgenden Zusammensetzung durchgeführt:

- 60% Aktivmaterial, z.B. Li$_4$MnSn$_2$Se$_7$
- 28% Leitruß (Super P)
- 12% Binder Polyvinylidenfluorid (PVDF)
- 280% Lösemittel N-Methyl-2-pyrrolidon (NMP)

(Mit einem höheren Anteil an Aktivmaterial sind noch bessere Ergebnisse zu erwarten als die hier vorgestellten).

Die Paste wurde mittels Rakeln (Doctorblading) auf einer Kupferfolie aufgebracht, die Nassdicke betrug 100 μm. Da das Aktivmaterial luftempfindlich war und Selen enthielt, wurde die Beschichtung in einer Glovebox durchgeführt (H$_2$O und O$_2$-Gehalt < 1 ppm). Die beschichteten Folien wurden danach 5 h bei 80 °C unter Vakuum getrocknet. Die entstandene Trockendicke lag bei etwa 20 μm. Die beschichtete Cu-Folie wurde in der Glovebox ausgestanzt. Elektroden mit einem Durchmesser von 11 mm. Die Elektroden wurden in einer Swagelok®-Zelle als Halbzellen aufgebaut.

Die Halbzelle besteht aus einer Arbeitselektrode (= der wie oben beschriebenen Elektrode), einer Gegenelektrode aus Lithium (Durchmesser 11 mm) und einer Referenzelektrode, ebenfalls aus Lithium (- 3mm Durchmesser). Als Elektrolyt wurde LiClO$_4$, in 1:1 EC/EMC (EC = Ethylcarbonat, EMC = Ethylmethylcarbonat benutzt. Als Separatoren dienten 1 Schicht Celgard 2325 der Fa. Celgard zwischen Gegenelektrode und Arbeitselektrode, 1 Schicht Freudenberg FS2019 der Fa. Freudenberg zwischen Arbeitselektrode und Gegenelektrode, und 2 Schichten Freudenberg FS2019 bei der Referenzelektrode. Dabei ergibt sich die Reihenfolge: Arbeitselektrode - Freudenberg-Separator - Celgard Separator (der zur Vermeidung von Dendritenwachstum verwendet wird) - Gegenelektrode (Li).

Cyclische Voltammogramme wie in **Figur 6** gezeigt wurden wie folgt aufgenommen: 5 Zyklen zwischen 3 und 0,01 V vs. Li/Li$^+$ mit Vorschubrate 0,1 mV/s, (in der Figur ohne ersten Zyklus, da dieser einige irreversible Reaktionen (z.B. aufgrund der SEI-Bildung, siehe oben) widerspiegelt). Die Messungen wurden an einem Potentiostaten, (Solartron CellTest$^®$ System 1470) durchgeführt. Mehrstufige Interkalation ist zu sehen. Einige Peaks gehören zu dem Leitruß, wie in **Figur 6b** zu sehen ist, aber die größten kommen von Aktivmaterial selbst. Die Langzeitversuche über 50 Zyklen wurden am Batterietester, Maccor 4000 (Mehrkanal-Potentiostat/Galvanostat) bei 3 und 0,01 V vs. Li/Li$^+$ durchgeführt. Die C-Rate liegt hier bei 0,006A; das entspricht 1C (Entladen in einer Stunde. Der Lade/Entladevorgang beschreibt die Stabilität der Zelle wie auch deren Effizienz. Die Coulomb'sche Effizienz ist als Entladekapazität/Ladekapazität definiert. Die Spezifische Ladung (mAh/g) wird hier auf Basis des gesamten "aktiven" Materials berechnet, d.h. der Summe von $Li_4MnSn_2Se_7$ und Leitruß.

Das Ragone-Diagramm ist genau genommen ein Pseudo-Ragone-plot. Ein "richtiges" Ragone-Plot zeigt Leistungsdichte (W/kg) über Energiedichte (Wh/kg), und dient normalerweise zum Vergleich unterschiedlicher Energiespeichertechnologien. Mit dem Pseudo-Ragone-Plot dagegen (Spezifische Ladung über Stromraten) lassen sich Informationen über die Strombelastbarkeit der Zelle zu erhalten.

Ein anderes Messprogramm am Maccor wurde benutzt, wobei die Stromrate variiert wurde. **Figur 8b** zeigt eine andere Darstellung der Messung. Jedes zweites Plateau wurde mit 1C gemessen, gleichzeitig wurden die Stromraten erhöht. Hier ist zu verstehen, dass nur die Entladestromrate geändert wurde, die Zelle wurde immer mit 1C geladen.

Berechnung zu Li-Interkalation: Unter der Annahme, dass die Spezifische Ladung ungefähr 400 mAh/g ist (siehe **Figur 6b),** ergibt sich ein Wert von 1400 Coulomb.

Unter der Bedingung, dass Z = M * Q/F, (Faraday'sches Gesetz worin Z die Anzahl der interkalierten Li$^+$Atome bedeutet, M die Molmasse (g/mol) ($M_{Li4MnSn2Se7}$ = 872,8 g/mol), Q die Ladung (in Coulomb) und F die Faraday-Konstante (96485 C/mol) ist, lässt sich ein Wert von Z = - 13 Li pro Elementarzelle im Kristall abschätzen.

**Patentansprüche**

1. Elektrodenmaterial, das sich zur Verwendung in einem Lithiumionen-Akkumulator eignet, umfassend

   (a) eine Verbindung der Zusammensetzung

$$A_n M^q{}_z T_x Q_Y \cdot mROH \qquad (I)$$

   worin
   A = Alkalimetall
   M = Ion eines Übergangsmetallelements und der Wertigkeit q
   T = Tetrel, mit Ausnahme von Pb,
   Q = Chalkogen
   ROH = kristallisiertes Lösungsmittel, mit R = H, $CH_3$ und/oder $C_2H_5$
   n = 2y - 4x - zq
   z = 0 oder 1 oder >1
   x = 2y - 2zq - n
   y = n + zq + 4x,
   m = 0, 1 oder größer 1,
   q = 1, 2, 3, 4, 5 oder 6
   wobei die Verbindung in einer Kristallstruktur mit Diamanttopologie vorliegt, in welcher

   - entweder A, T und Q sowie ggf. M Gitterplätze der kubischen oder hexagonalen Diamantstruktur einnehmen oder
   - die Schwerpunkte komplexer Anionen $[T_x Q_y]^{nz-}$ und/oder $[M_z T_x Q_z]^{n-}$ die Gitterplätze (Atompositionen) der kubischen oder hexagonalen Diamantstruktur einnehmen, während die Ionen des Alkalimetalls A sowie ROH, sofern m ≠ 0, Zwischengitterplätze einnehmen,
   und

   (b) ein elektronisch leitendes Material.

2. Elektrodenmaterial nach Anspruch 1, worin q = 2 ist oder worin z = 0 oder 1 ist.

3. Elektrodenmaterial nach Anspruch 1 oder 2, worin das elektronisch leitende Material ein Kohlenstoff-Material ist, vorzugsweise ausgewählt unter Rußen und Graphit, wobei sich das Elektrodenmaterial als negatives Elektrodenmaterial eignet.

4. Elektrodenmaterial nach einem der voranstehenden Ansprüche, weiterhin umfassend ein organisches Bindemittel.

5. Elektrodenmaterial nach einem der voranstehenden Ansprüche, worin das AlkalimetallElement ausgewählt ist unter Lithium und Kalium und/oder worin das Ion eines Übergangselements ausgewählt ist unter Mangan-, Zink- und Cadmium-Ionen, vorzugsweise in der Oxidationsstufe (+II) und/oder worin das Tetrel ausgewählt ist unter Germanium und Zinn und/oder worin das Chalkogen ausgewählt ist unter Schwefel und Selen.

6. Elektrodenmaterial nach Anspruch 5, worin die Verbindung der Formel (I) ausgewählt ist unter $Li_2SnSe_3$, $Li_4MnSn_2Se_7$, $[K_2H_2O)_3][MnGe_4Se_{10}]$ und $[K_4(H_2O)_4[GeSe_4]$.

7. Verwendung einer Verbindung der Zusammensetzung

$$A_nM^q_zT_xQ_Y \bullet mROH \qquad (I)$$

worin
A = Alkalimetall
M = Ion eines Übergangsmetallelements und der Wertigkeit q
T = Tetrel, mit Ausnahme von Pb,
Q = Chalkogen
ROH = kristallisiertes Lösungsmittel, mit R = C, $CH_3$ und/oder $C_2H_5$
n = 2y - 4x - zq
z = 0 oder 1 oder >1
x = 2y - 2zq - n
y = n + zq + 4x,
m = 0, 1 oder größer 1,
q = 1, 2, 3, 4, 5 oder 6
wobei die Verbindung in einer Kristallstruktur mit Diamanttopologie vorliegt, in welcher

- entweder A, T und Q sowie ggf. M Gitterplätze der kubischen oder hexagonalen Diamantstruktur einnehmen oder
- die Schwerpunkte komplexer Anionen $[T_xQ_y]^{nz-}$ und/oder $[M^q_zT_xQ_z]^{n-}$ die Gitterplätze (Atompositionen) der kubischen oder hexagonalen Diamantstruktur einnehmen, während die Ionen des Alkalimetalls A sowie ROH, sofern m ≠ 0, Zwischengitterplätze einnehmen,

zur Leitung und/oder Speicherung von Alkalimetallkationen.

8. Verwendung nach Anspruch 7, worin es sich bei der Leitung um die Leitung von $Li^+$-Ionen und/oder von $K^+$-Ionen handelt und worin es sich bei der Speicherung von Alkalmetallkationen um die Speicherung von $Li^+$-Ionen handelt.

9. Verwendung nach Anspruch 7 oder 8, wobei die Verbindung als Bestandteil eines Separators eingesetzt wird.

10. Verwendung eines Elektrodenmaterials nach einem der Ansprüche 1 bis 6 zur Herstellung eines Lithiumakkumulators oder in einem Lithiumakkumulator.

11. Verwendung eines Elektrodenmaterials nach einem der Ansprüche 1 bis 6 zur Herstellung einer negativen Elektrode oder als negative Elektrode.

12. Verbindung der Zusammensetzung

$$A_nM_zT_xQ_Y \text{ x } mROH \qquad (I)$$

mit A = Li, M = $Mn^{2+}$, T = Sn, Q = Se, n = 2 oder 4, z = 0 oder 1, x = 1 oder 2, y = 3 oder 7 und m = 0, 1 oder größer 1,

wobei die Verbindung in einer Kristallstruktur mit Diamanttopologie vorliegt, in welcher

- entweder A, T und Q sowie ggf. M Gitterplätze der kubischen oder hexagonalen Diamantstruktur einnehmen oder
- die Schwerpunkte komplexer Anionen $[T_xQ_y]^{nz-}$ und/oder $[M_zT_xQ_z]^{n-}$ die Gitterplätze (Atompositionen) der kubischen oder hexagonalen Diamantstruktur einnehmen, während die Ionen des Alkalimetalls A sowie ROH, sofern m ≠ 0, Zwischengitterplätze einnehmen.

13. Verbindung nach Anspruch 12 der Zusammensetzung $Li_2SnSe_3$ oder $Li_4MnSn_2Se_7$.

Figur 1a

Figur 1b

Figur 2a

Figur 2b

[Ge$_4$Se$_{10}$]

[MnSe$_4$]

Figur 3

Figur 4a

Figur 4b

Fig. 5

Figur 6a

**Figur 6b**

**Figur 7**

**Figur 8a**

**Figur 8b**

**Figur 9**

Figur 10

**Europäisches Patentamt**
**European Patent Office**
**Office européen des brevets**

# EUROPÄISCHER RECHERCHENBERICHT

Nummer der Anmeldung

EP 13 17 4986

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | THOMAS KAIB ET AL: "New Lithium Chalcogenidotetrelates, LiChT: Synthesis and Characterization of the Li + -Conducting Tetralithium ortho-Sulfidostannate Li 4 SnS 4", CHEMISTRY OF MATERIALS, Bd. 24, Nr. 11, 12. Juni 2012 (2012-06-12), Seiten 2211-2219, XP055086182, ISSN: 0897-4756, DOI: 10.1021/cm3011315 | 1,2,5,7, 8,10 | INV. C01D15/00 H01M4/136 |
| A | * das ganze Dokument * | 6,9,12, 13 | |
| X,D | US 6 528 208 B1 (THACKERAY MICHAEL M [US] ET AL) 4. März 2003 (2003-03-04) * Absätze [0006] - [0007], [0038] - [0042], [0047] - [0049], [0074] - [0076], [0087]; Abbildungen 1-26 * | 1-5,7, 10,11 | |
| A | J Morales ET AL: "SnSe y S 2 - y cathodic materials in lithium and sodium cells", Electrochimica Acta, 1. Januar 1997 (1997-01-01), Seiten 357-367, XP055086189, DOI: 10.1016/S0013-4686(96)00214-9 Gefunden im Internet: URL:http://www.sciencedirect.com/science/article/pii/S0013468696002149 * das ganze Dokument * | 1,2,5,7, 8,11 | RECHERCHIERTE SACHGEBIETE (IPC) C01D H01M |

Der vorliegende Recherchenbericht wurde für alle Patentansprüche erstellt

| Recherchenort | Abschlußdatum der Recherche | Prüfer |
|---|---|---|
| Den Haag | 31. Oktober 2013 | Bossa, Christina |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 17 4986

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2013

| Im Recherchenbericht angeführtes Patentdokument | Datum der Veröffentlichung | Mitglied(er) der Patentfamilie | Datum der Veröffentlichung |
|---|---|---|---|
| US 6528208        B1 | 04-03-2003 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6908709 B2
- DE 69827700 T2
- DE 59434683 T2
- EP 671774 B1
- EP 1039568 B1
- US 6528208 B1

**In der Beschreibung aufgeführte Nicht-Patentliteratur**

- **J.M.TARASCON ; M. ARMAND.** *Nature,* 2001, vol. 414, 359
- **L. JI et al.** *Energy and Environmental Science,* 2011, vol. 196, 2682
- **VON K. O. KLEPP.** *Journal of Solid State Chemistry,* 1995, vol. 117, 356-362
- **S. HADDADPOUR ; M. MELULLIS ; H. STAESCHE ; C.R. MARIAPPAN ; B. ROLING ; R CLÉRAC ; S. DEHNEN.** *Inorg. Chem.,* 2009, vol. 48, 1689-1698
- **M. MELULLIS ; S. DEHNEN.** *Z. anorg. Allg. Chem.,* 2007, vol. 633, 2159-2167